# EUROPEAN PATENT APPLICATION

(11) **EP 2 090 499 A1**
(43) Date of publication of application: **19.08.2009**
(21) Application number: 08001394.9
(22) Date of filing: 25.01.2008
(51) Int. Cl.: B62D 25/10, B62D 25/12, B60K 11/06

(54) **Engine cover with coolings fins**

(71) Applicant: GM Global Technology Operations, Inc., Detroit MI 48265-3 (US)
(72) Inventor: Powell, Bob R., Jr., 48009-1994 Birmingham (US); Sachdev, Anil K., 48309 Rochester Hills (US); Rolandson, Ola, 46890 Vargön (SE); Pettersson, Rikard, 46159 Trollhättan (SE); Pettersson, Susanne, 46159 Trollhättan (SE); Wigholm, Pernilla, 46159 Trollhöttan (SE)
(74) Representative: Strauss, Peter

(57) **Abstract**

The present invention relates to an improved automotive engine cover, which at least partly covers an automotive engine in an automotive engine compartment. The engine cover comprises cooling fins which are made of a metallic or ceramic material. Accordingly, an automotive engine cover is provided, with improved cooling effect as compared to known automotive engine covers. The improved cooling effect prolongs the life-time of the automotive engine cover. The improved cooling effect also help to increase the life-time of other components in the engine compartment, which otherwise may degrade, deform or even melt due to heat transfer from heat-generating components in the engine. In turn, the this paves the way for the design of engines which may generate even more heat than today.

## Description

### Field of the Invention

The present invention relates to an automotive engine cover, such as a cap or a casing, or the like, which at least partly covers an automotive engine in an engine compartment in an automotive vehicle.

### Technical Background

Automotive engine covers are known to be used in automotive engine compartments for various reasons, such as for protecting components in the engine compartment from getting exposed to dust, for reducing damage on components due to oil leakage in the engine, and for reducing noise from the engine which for example could disturb passengers in the passenger compartment. In addition, engine covers may be used for aesthetic reasons, where it is appreciated that a certain engine cover design may give the engine and the engine compartment a nice-looking appearance.

When an automotive engine is running, for example while a passenger car or another automotive vehicle is driving on a road, various heat-generating components in the engine generate heat. As the heat increases it is transferred to other parts of the engine compartment. That is, as the heat is transferred from the heat-generating components also non-heat-generating components in the engine compartment, such as engine covers, are exposed to the heat.

There is a limit to how much heat can be generated by an automotive engine without significantly reducing the life-time of many of the components that are present in the engine compartment, when such components are exposed to heat directly or indirectly by transfer of heat from hot areas of the automotive engine.

If the heat limit is passed, this may result in that non-heat-generating components, such as engine covers, in the engine compartment can degrade, deform or even melt.

To date, many engine covers used in automotive engine compartments have been made of various polymeric materials. Such polymeric materials are sensitive to heat and may degrade, deform or melt if exposed to too much heat.

To a certain extent this problem has been addressed by instead using engine covers made of certain heat-resistant materials, such as special polymeric materials or metallic materials.

For example, KR 20040023904 discloses a heat-resistant polyamide nano-composite resin composition for automotive engine covers.

US 6299834 discloses use of heat-resistant magnesium alloys in engine covers.

On a general level these documents concern the use of heat-resisting materials in automotive engine covers for handling the heat which is generated by automotive engines.

Furthermore, today research and development of automotive engines is gaining importance, not the least for environmental reasons. For example, such environmental improvements may refer to the production of more clean exhaust gases. This may be obtained through increased temperature in the catalytic converters, which, in turn, causes an increase of the temperature that engine components and components in the engine compartment are exposed to.

Hence, when developing and designing automotive engines, it is likely that increased engine temperatures even higher than today need to be dealt with in order to obtain desired technical or environmental improvements.

Known automotive engine covers do not allow enough freedom in designing engines which may generate even more heat than today, since the life-time of the engine covers and of other non-heat-generating components in the engine compartment would be significantly reduced with increased engine temperatures.

It will thus be appreciated that there is a need for a new type of automotive engine covers, with improved cooling characteristics and a with a longer life-time.

### Summary of the Invention

One object of the present invention is to provide a new type of automotive engine cover, with improved cooling characteristics.

Another object of the present invention is to provide a new type of automotive engine cover having an increased life-time.

In turn, this helps paving the way for the design of engines which may generate even more heat than today.

These and other objects are achieved by an engine cover according to independent claim 1. Preferred embodiments of the invention are defined in the dependent claims.

According to one aspect of the present invention there is provided an improved automotive engine cover having a body structure which at least partly covers an automotive engine. As a characterising feature the automotive engine cover according to the present invention comprises cooling fins.

As used herein, cooling fins refer to fins, ribs or any similar members, which provide and define an enlarged cooling area of the engine cover.

Automotive engines are normally designed with a cooling radiator which is intended to provide a cooling effect on the engine and the heat-generating components in the engine compartment. In addition, during driving, specially arranged air inlets and a fan system provide an airflow which is intended to provide a further cooling effect on the engine and on the heat-generating components in the engine compartment.

By that the automotive engine cover comprises metallic cooling fins, an enlarged cooling area is provided. An improved cooling effect is obtained by that the enlarged cooling area is exposed to the surrounding air. Advantageously, the enlarged cooling area is exposed to the airflow caused by the air inlets or the fan system.

For an even better cooling effect, the enlarged cooling area is exposed to a turbulent air flow. Therefore, in a preferred embodiment, the fins constituting the enlarged cooling area are arranged such that a turbulent airflow is generated around the cooling fins.

According to one embodiment of the automotive engine cover according to the present invention, the cooling fins comprise a metallic material.

The enlarged cooling area including the fins is preferably composed of materials which are classed as good heat-conducting materials, such as metallic materials in order to provide for a really efficient cooling of the engine cover. The notion of a metallic material in this case also includes alloys.

According to one embodiment of the automotive engine cover according to the present invention, the cooling fins comprise a light-weight metallic material.

The notion of a light-weight metallic material also includes light-weight alloys.

According to one embodiment of the automotive engine cover according to the present invention, the cooling fins comprise at least one of an Mg-based material and an Al-based material.

Preferably, the cooling fins are made from a light-weight metallic material or alloy, such as Mg-based mterial and/or an Al-based material. These materials are both good heat conductors and have low weight. Low weight materials are desirable, since reduced weight of a vehicle can have environmental advantages. For example, the amount of exhaust gases can be reduced by that the consumption of fuel may be lowered due to lower vehicle weight. In this sense Mg or an Mg-based material is preferred due to lower weight than Al. If an Mg-based alloy is used, alloy comprising at least 90% Mg are preferred.

According to one embodiment of the automotive engine cover according to the present invention, the cooling fins at least partly comprise a ceramic material.

As mentioned, he enlarged cooling area including the fins is preferably composed of materials which are classed as good heat-conducting materials. Certain ceramic materials show good heat-conducting properties and may therefore provide for an efficient cooling of the engine cover.

According to one embodiment of the present invention, the body structure is at least partly made of a metallic material.

The notion of a metallic material in this case also includes alloys.

According to one embodiment of the present invention, the body structure is at least partly made of a light-weight metallic material.

The notion of a light-weight metallic material also includes light-weight alloys.

Metallic materials are good heat-conducting materials and hence a en efficient cooling effect is provided by the entire engine cover together with the fins. In this sense, the enlarged cooling area is even larger.

According to one embodiment of the present invention, the body structure is at least partly made of a polymeric material.

One such polymeric material may be PPA, polyphthanalamide. Polymeric materials are generally heat-isolating materials, but in combination with cooling fins made from metallic or ceramic materials, polymeric materials which have sufficient heat-resistance can be used. The cooling fins which are made of a metallic or ceramic material helps to prolong the life-time of the entire automotive engine cover.

According to one embodiment of the present invention, the cooling fins have a straight shape.

According to one embodiment of the present invention, the cooling fins have at least one of a curved shape and an arced shape.

According to one embodiment of the present invention, the body structure and the cooling fins are manufactured integrally as one single component.

According to one embodiment of the present invention, the body structure and the cooling fins are manufactured as separate parts, which may then assembled together by use of connecting means for fixing the cooling fins onto the body structure.

The improved cooling effect of the engine cover according to the present invention not only reduces the average and peak-level temperatures of the engine cover itself, but also provides a cooling effect on other engine components which are placed in the vicinity of the engine cover in the engine compartment.

Thus, the cooling effect of the engine cover according to the present invention may also help to increase the lifetime of other components in the engine compartment, which otherwise may degrade, deform or even melt due to heat transfer from the heat-generating components in the engine. Especially, the life-time of components made of various polymeric materials may be increased due to the cooling effect of the engine cover according to the present invention. Such components may be, for example, electrical supply components such as cables, tubes or pipes such as exhaust air pipes, so-called blow-by pipes and SAI (secondary air inlet) pipes.

Hence, the cooling effect of the engine cover according to the present invention allows for the designing of engines which can generate more heat without significantly reducing the life-time of engine components and components in the engine compartment which are exposed to heat.

### Brief Description of the Drawings

The invention will now be described in more detail with reference to the accompanying schematic drawings, which by way of example illustrate a currently preferred embodiment of the invention.
Fig. 1a-d discloses one embodiment of an engine cover according to the present invention, which comprises straight cooling fins.
Fig. 2 discloses a second embodiment of an engine cover according to the present invention, which comprises curved cooling fins.
Fig. 3 discloses a third embodiment of an engine cover according to the present invention, which comprises arced cooling fins.
Fig. 4 discloses a schematic diagram of engine cover temperature levels at different stages of driving.

### Detailed Description of Preferred Embodiments

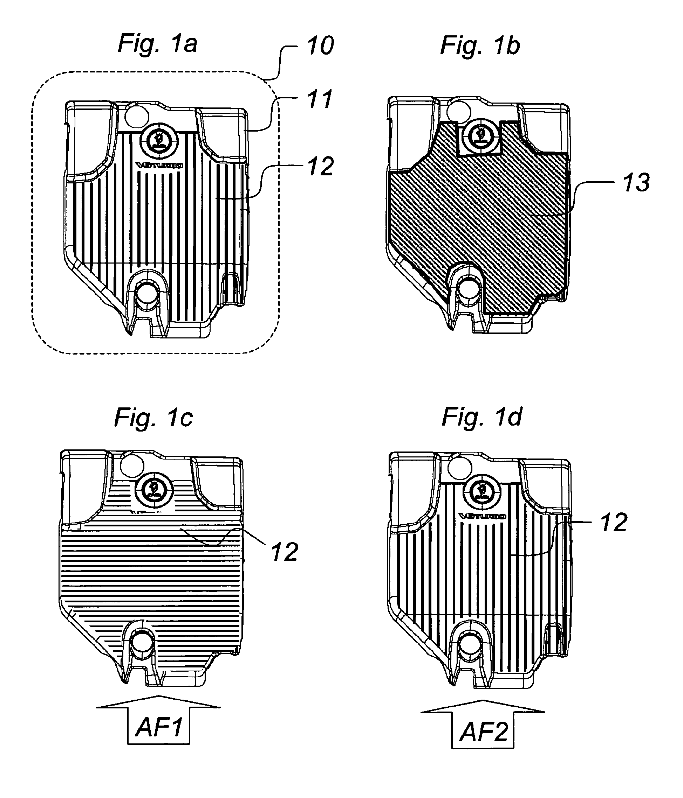

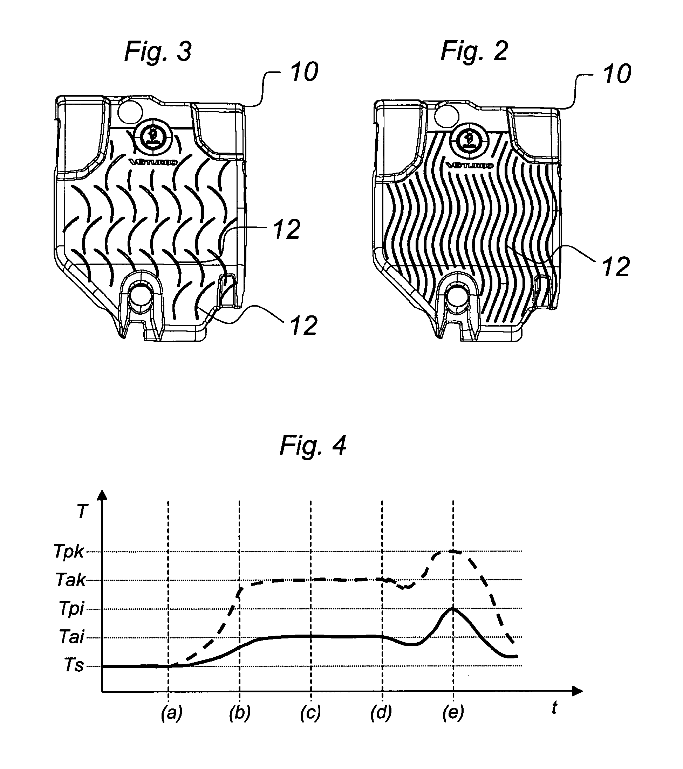

In Fig. 1-3 different embodiments of the cooling fins 12 with different geometrical shapes are disclosed, such as straight (Fig. 1a-d), curved (Fig. 2) or arced (Fig.3) fins.

Fig. 1a-d discloses one embodiment of an engine cover according to the present invention, which comprises straight cooling fins.

In Fig. 1a is disclosed an engine cover 10 comprising a body structure 11. The peripheral shape of the engine cover disclosed in Fig. 1 is just one example of a shape of an engine cover according to the present invention. The engine cover according to the present invention may have different shapes in different cases, where each engine cover is optimally shaped to fit into various positions in an automotive engine.

The body structure 11 comprises at least one portion with cooling fins 12 distributed on the outer surface of the engine cover, providing an cooling area 13 (shown in Fig 1b). The body structure 11 and the cooling fins 12 are made of any appropriate material, preferably a metallic material, preferably an Mg and/or Al based metallic material.

The dimensions and geometrical shapes of the cooling fins 12 can be selected in various ways as provided that an enlarged cooling area 13 s obtained according to the invention. Moreover, the amount and position of cooling fins 12 can be varied as to obtain an optimal cooling effect in different cases.

The cooling fins 12 in the cooling area 13 can be arranged such that the surfaces of the cooling fins 12 are exposed to the airflow caused by the air inlets or the fan system from any angle.

For example, the cooling fins may be arranged so that the surfaces of the cooling fins are in line with the airflow, indicated by arrow AF1 (see Fig 1c). In another embodiment the cooling fins may be arranged so that the surfaces of the cooling fins are perpendicular to the airflow, indicated by arrow AF2 (see Fig 1d).

In other embodiments, the cooling fins 12 may be arranged in other angles with respect to the airflow, (not shown). The optimal arrangement and dimensions of the cooling fins is depends on various embodiment of automotive engines and automotive vehicles.

Fig. 2 discloses a second embodiment of an engine cover according to the present invention, which comprises curved cooling fins.

Fig. 3 discloses a third embodiment of an engine cover according to the present invention, which comprises arced cooling fins.

As mentioned above, for an even better cooling effect the enlarged cooling area 13 may be exposed to a turbulent airflow. Therefore, the cooling fins 12 constituting the enlarged cooling area 13 may be constituted and arranged such that a turbulent airflow is generated around the cooling fins 12. In Fig 2 and 3 some examples of non-straight fins are disclosed, such as curved (Fig. 2) or arced (Fig.3) fins. The curved or arced shapes helps to create more turbulent airflows around the cooling fins 12, thus providing a better cooling effect. In Fig 3 the cooling fins 12 with arced shapes are arranged in a more scattered way. The scattered arrangement helps to create a more turbulent airflow.

Other arrangements of the cooling fins 12 are also possible without departing from the scope of the present invention.

Fig. 4 discloses a schematic diagram of engine cover temperature levels at different stages of driving.

In Fig. 4 it is schematically illustrated that the improved cooling effect of the engine cover according to the present invention reduces both the average temperatures and peak-level temperatures of the engine cover and of other non-heat generating components which are placed in the vicinity of the engine cover in the engine compartment, as compared to the average temperatures and peak-level temperatures of an engine cover and of other non-heat generating components in a corresponding automotive vehicle in which an engine cover according to known art is used in a corresponding fashion.

The improved cooling effect that comes from using an engine cover according to the present invention is obtained at all stages of driving: directly after starting the engine (a); during driving of the vehicle (b); during driving stops without turning off the engine (c); directly after turning off the engine (d); and the following cooling time (e).

It has been found by the inventors that there existed a specific need to reduce the temperature of the engine cover at the period after driving and after the engine has been turned off, when the fan system stops to run alone (e). It was found that ordinary engine covers can reach a temperature of 275°C at that stage). In addition, it has been found that ordinary engine covers in fact may exhibit higher temperatures during this period than during the driving period. This is caused by heat, which is left inside the engine after the fan system is turned off, which is transferred to the engine cover. Sometimes this period is referred to as the soak period.

The present invention effectively reduces the temperature at this stage (e). The cooling fins provides efficient cooling during the periods where an air flow is provided (a-d), that is both during driving and during the time when the fan system runs alone (e). That is, also some time after the air flow period, the cooling fins provides an essentially reduced temperature, which gives a an improved cooling effect also at the later stage (e).

In Fig. 4, the schematically indicated temperature level which is indicated by "Tpk" stands for the Temperature Peak for engine covers according to Known art. In Fig. 4, the schematically indicated temperature level which is indicated by "Tpi" stands for the Temperature Peak for engine covers according to the present Invention. In Fig. 4, the schematically indicated temperature level which is indicated by "Tak" stands for the Temperature Average for engine covers according to Known art. In Fig. 4, the schematically indicated temperature level which is indicated by "Tai" stands for the Temperature Average for engine covers according to the present Invention. In Fig. 4, the schematically indicated temperature level which is indicated by "Ts" stands for the Temperature for engine covers before or at the time the engine is Started.

Accordingly, an automotive engine cover is provided, which results in an improved cooling effect as compared to automotive engine covers according to the prior art . This cooling effect not only prolongs the life-time of the engine cover but also results in an cooling, life-prolonging effect of other components in the engine compartment. Moreover, new design possibilities for increasing the engine efficiency is provided, since the invention allows more heat to be generated without essentially increasing the average temperature on engine components.

Although the present invention has been described in connection with particular embodiments thereof, it is to be understood that various modifications, alterations and adaptations may be made by those skilled in the art without departing from the claimed scope.

For example, the engine cover body structure 11 may comprise one or more holes and/or inner cooling fins (not shown) to provide additional cooling effects on the inside of the automotive engine cover, in that the airflow caused by the air inlets or the fan system may pass through the holes towards the inner cooling fins. The distance between the engine cover and the automotive engine can be varied in order to provide optimal airflow and efficient cooling on the inside of the automotive engine cover.

In order to withstand excessive forces, the engine cover 10 may be reinforced by any appropriate construction and material, such as a reinforcing grid made of a strong, reinforcing material.

The body structure 11 and the cooling fins 12 can be made of the same or different materials, one or several materials, which provide excellent heat-resistance, and eventually materials which are also good heat conductors. Further, the body structure 11 and the cooling fins 12 can either be manufactured integrally as one single component or be made as separate parts, in different manufacturing processes, which parts are then assembled together. In one embodiment the array of cooling fins are manufactured as one part, or "module", which may be assembled onto the body structure 11.

The cooling fins 12 or "module" may comprise at least one connecting means for fixing the cooling fins 12 or "module" onto the body structure 11.

Moreover, the engine cover may comprise at least one fitting and/or removal device such as a screw, click or edged connecting device for fixing the engine cover in the engine compartment. Moreover, the body structure 11 may comprise one or more emblems and possibly other additional information or instructions.

## Claims

1. An automotive engine cover (10) having a body structure (11) which at least partly covers an automotive engine, **characterized in that that** said engine cover (10) comprises cooling fins (12).

2. The automotive engine cover according to claim 1, wherein said cooling fins (12) comprise a metallic material.

3. The automotive engine cover according to claim 2, wherein said metallic material is a light-weight metallic material.

4. The automotive engine cover according to claim 2 or 3, wherein said light-weight metallic material is at least one of an Mg-based material and an Al-based material.

5. The automotive engine cover according to claim 1, wherein said cooling fins (12) at least partly comprise a ceramic material.

6. The automotive engine cover according to any one of claim 1 to 5, wherein the body structure (11) is at least partly made of a metallic material.

7. The automotive engine cover according to any one of claim 1 to 6, wherein the body structure (11) is at least partly made of a light-weight metallic material.

8. The automotive engine cover according to any one of claim 1 to 7, wherein the body structure (11) is at least partly made of a polymeric material.

9. The automotive engine cover according to any one of claim 1 to 8, wherein the cooling fins (12) have a straight shape.

10. The automotive engine cover according to any one of claim 1 to 8, wherein the cooling fins (12) have at least one of a curved shape and an arced shape.

11. The automotive engine cover according to any one of claim 1 to 10, wherein the body structure (11) and the cooling fins (12) are manufactured integrally as one single component.

12. The automotive engine cover according to any one of claim 1 to 10, wherein the body structure (11) and the cooling fins (12) are manufactured as separate parts, which may then assembled together by use of connecting means for fixing the cooling fins (12) onto the body structure (11).
